(19) Europäisches Patentamt
European Patent Office
Office européen des brevets

(11) **EP 1 658 608 B1**

(12) **EUROPEAN PATENT SPECIFICATION**

(45) Date of publication and mention
of the grant of the patent:
**31.10.2007 Bulletin 2007/44**

(51) Int Cl.:
*G11B 7/24* *(2006.01)*       *G11B 7/005* *(2006.01)*
*G11B 7/135* *(2006.01)*      *G11B 7/13* *(2006.01)*
*G06K 19/16* *(2006.01)*

(21) Application number: **04769805.5**

(22) Date of filing: **12.08.2004**

(86) International application number:
**PCT/IB2004/051453**

(87) International publication number:
**WO 2005/020221 (03.03.2005 Gazette 2005/09)**

(54) **OPTICAL RECORD CARRIER**

OPTISCHER AUFZEICHNUNGSTRÄGER

SUPPORT D'ENREGISTREMENT OPTIQUE

(84) Designated Contracting States:
**AT BE BG CH CY CZ DE DK EE ES FI FR GB GR HU IE IT LI LU MC NL PL PT RO SE SI SK TR**

(30) Priority: **20.08.2003 EP 03102612**

(43) Date of publication of application:
**24.05.2006 Bulletin 2006/21**

(73) Proprietor: **Koninklijke Philips Electronics N.V.**
**5621 BA Eindhoven (NL)**

(72) Inventors:
• **'T HOOFT, Gert, W.**
**NL-5656 AA Eindhoven (NL)**
• **HENDRIKS, Robert, F., M.**
**NL-5656 AA Eindhoven (NL)**
• **BROER, Dirk, J.**
**NL-5656 AA Eindhoven (NL)**

(74) Representative: **van Liempd, Jan**
**Philips**
**Intellectual Property & Standards**
**P.O. Box 220**
**5600 AE Eindhoven (NL)**

(56) References cited:
**US-A- 4 325 135**       **US-A- 5 392 271**

• **PATENT ABSTRACTS OF JAPAN vol. 1997, no. 02, 28 February 1997 (1997-02-28) & JP 08 272923 A (TOPPAN PRINTING CO LTD), 18 October 1996 (1996-10-18)**
• **PATENT ABSTRACTS OF JAPAN vol. 008, no. 275 (P-321), 15 December 1984 (1984-12-15) & JP 59 142758 A (SUWA SEIKOSHA KK), 16 August 1984 (1984-08-16)**

**Description**

The invention relates to an optical record carrier having at least one information layer, wherein information is encoded in an information structure comprising information areas, which alternate with intermediate areas.

The invention also relates to a device for reading such a record carrier.

Such a record carrier is well known in the art and its information structure can be read by means of a dedicated device. Currently the information structure is a track wise arranged structure of information areas, which alternate with intermediate areas in the track direction. The read device comprises a radiation source, usually a diode laser, which generates a read beam having a given wavelength. An objective lens comprising one or more lens element(s) focuses a read beam to a read spot on the information layer. During reading of a disc shaped record carrier, the read spot scans an information track, for example by rotating a disc shaped record carrier relative to the read spot. Moving the record carrier and the read spot relative to each other in the radial direction allows scanning and thus reading of all information tracks. The size of the read spot is larger than that of the individual information areas so that these areas diffract the incident beam, i.e. splits this beam into a non-deflected zero order sub-beam and a number of deflected higher order sub-beams. Current optical record carriers have a reflective information layer and the zero order sub-beam and portion of the first order sub-beams pass through the objective lens. This lens concentrates the radiation portions on a radiation-sensitive detection system, whereby these radiation portions interfere with each other. The radiation-sensitive detection system, which comprises one or more detectors, converts the radiation incident on it in an electrical signal, which represents the information momentarily read out.

There is a steadily demand for an ever increasing information density on optical record carriers, i.e. for ever decreasing size of the information areas and intermediate areas and decreasing distance between the information tracks. For the different types of record carriers, which succeeded one another in time: compact disc (CD), digital versatile disc (DVD) and blue ray disc, the density of the information areas has increased from 1 per$\mu$ m$^2$, via 2,5 per $\mu$m$^2$ to 17 per $\mu$m$^2$. A blue ray disc is an optical disc that is intended to be read by a blue read beam having a wavelength smaller than a red or infrared read beam.

For reading information areas with decreased size a read spot with a correspondingly decreased size should be used, otherwise the information areas can not be read separately. This means that the resolution of the reading device should be increased. The conventional resolution of a read device is proportional to NA/$\lambda$, wherein NA is the numerical aperture of the objective lens and $\lambda$ is the wavelength of read beam. Increasing NA and/or decreasing $\lambda$ could increase the resolution. The fact that the depth focus of the objective lens is proportional to $\lambda$/(NA)$^2$ sets a limit to increasing the NA, because for large NA the depth of focus will become too small. Reading devices with sufficient small read wavelength can be realized only when diode lasers emitting such small wavelength are available.

US-A 4,242,579 describes a reading device having a resolution, which is, for example two times, larger than the conventional resolution. The increased resolution is realized by arranging that the objective lens passes only portions of only one first order sub-beam and of the zero order sub-beam of the reflected read radiation to the radiation-sensitive detection system and by using a detector, which has a small dimension in the scan direction. To that end the read beam and the record carrier are tilted relative to each other, i.e. the read beam is not incident perpendicularly on the record carrier. The read beam has to pass the substrate of the record carrier and this substrate has a given thickness, for example 1,2 mm, to provide dust protection for the information layer and to give the record carrier sufficient mechanical strength. Therefor a non-perpendicular incidence of the read beam may introduce an unacceptable amount of aberration, such as coma and astigmatism, in the read beam. This results in a read spot on the information layer that is larger than acceptable and causes cross talk.

To solve this problem, it has recently been proposed, in the unpublished EP patent application 03100817.0, to use a conventional optical reading device and to provide the information layer of the record carrier with a diffraction grating. This diffraction grating directs radiation of the read beam, which is perpendicularly incident on the record carrier, in directions at a sharp angle with the chief ray of the incident beam. Providing the record carrier with such a diffraction grating allows reading an information structure with considerable increased density, whilst using a read beam which passes perpendicular through the substrate of the record carrier and is perpendicular incident on the information layer so that no coma and astigmatic aberration occurs. Perpendicularly incident understood to mean that the chief ray of the incident read beam, which is currently a converged beam, is perpendicular to the record carrier. The diffraction grating is called a regular or information-less grating to distinguish it from the diffractive information structure.

As described in said unpublished EP patent application 03100817.0, the regular diffraction grating deflects portions of the first order sub-beams formed by the diffractive information structure such that these portions pass through the objective lens. These portions are together with radiation that is double diffracted in the zero order, focused on the radiation-sensitive detector to interfere at the location of this detector. This detector may be the same as the detector used in the read device disclosed in US-A 4,242,579.

Combining an optical information structure with a regular grating allows increasing the spatial frequency of the information areas, hereinafter spatial frequency, which can be read with a conventional read device, but it does not allow to read an information structure having the conventional spatial frequencies. In other words, providing the information layer with a regular grating only shifts the band of frequencies that can be read, but does not enlarge this frequency band.

US 4,325,135 describes detection of two mutually perpendicular polarised read beams separately.

JP-A-09161308 describes a system including two reading light spots separated from each other perpendicularly to the track direction.

It is an object of the invention to provide means for enlarging the band of spatial frequencies of an information layer that can be read. According to the invention this object is realized by means of a record carrier as defined in the opening paragraph and which is characterized in that the information layer is provided with a polarisation-sensitive diffraction grating comprising a grating layer, which is divided in grating strips of a first type alternating with intermediate strips of a second type, at least one of the types comprising a birefringent material, and in that the refractive indices of the grating strips and intermediate strips are different for radiation polarised in a direction parallel to grating plane and perpendicular to the grating strips.

Providing the information layer with such a grating allows both reading of high spatial frequency information, by means of a read beam component, which has a polarisation direction parallel to the direction of the grating strips and reading of lower spatial frequency information, by means of a read beam component, which has a polarisation direction perpendicular to the grating strips. The latter beam component does not "see" the diffraction grating so that only its first order beam portions, which are diffracted at smaller angles by the diffractive information structure pass through the objective system. These beam portions comprise information about the lower frequency information.

The record carrier may be further characterized in that the birefringent material is a liquid crystal.

Preferably, the record carrier is characterized in that the liquid crystal is a nematic liquid crystal

Nematic liquid crystals are well-known materials, which are successfully used in display panels for image display devices, because of their birefringent properties.

The birefringent material may be a polymeric material comprising polymerised aligned crystalline monomers.

The optical record carrier may be further characterized in that the grating strips comprise an anisotropic material having at least two refractive indices and the intermediate strips comprise isotropic material and in that one of the refractive indices of the anisotropic material is substantially equal to the refractive index of the isotropic material.

Substantially equal is understood to mean that in the ideal case the said refractive indices are equal to each other, but that a satisfactorily result is obtained if there is a small difference between these refractive indices.

In this embodiment only one of the two types of strips; grating strips and intermediate strips consist of birefringent material and the other type of strips has only one refractive index. The refractive index a beam of radiation incident on the grating layer will meet, i.e. the effective refractive index, depends on the polarisation direction of this beam with respect to the grating plane and the direction of periodicity of the grating.

The optical record may be further characterized in that the grating strips differ from the intermediate strips in that the degree of alignment of the liquid crystal molecules in the grating strips is substantially different from that degree in the intermediate strips.

Alternatively and preferably the optical record carrier is characterized in that the grating strips differ from the intermediate strips in that the direction of alignment of the liquid crystal molecules in the grating strips is different from that direction in the intermediate strips.

By spatially varying the orientation of the liquid crystal, i.e. its alignment direction, a grating structure is obtained that has a higher diffraction efficiency than a grating structure wherein the degree of alignment is spatially varied, because in the latter the ordinary refractive index is not equal to the refractive index in the isotropic portions of the structure.

A first embodiment of the record carrier is characterized in that the birefringent grating is a transmission grating.

A second embodiment of the record carrier is characterized in that the birefringent grating is a reflective grating.

As currently optical record carriers are read in reflection and the information layer is covered with a reflective layer, this embodiment will be most used. The birefringent grating will be arranged between the information layer and the reflective layer.

The read device for reading this record carrier is adapted to this record carrier so that the invention is also implemented in the read device. Such a device that comprises a radiation source unit for supplying a read beam, an objective system for focusing the read beam in the information layer and a detection branch comprising a radiation-sensitive detection system for converting read beam radiation from the record carrier into an electrical signal, is characterized in that the radiation source unit supplies read beam radiation having two mutually perpendicular polarisation components, in that the detection branch comprises a polarisation-sensitive beam splitter and in that the radiation-sensitive detection system comprises a separate detector for each of the two polarisation components from the beam splitter.

A read device for use with a record carrier having interleaved higher spatial frequency tracks and lower spatial frequency tracks, is further characterized in that the radiation components constitute two spatially separated read beams and in that the objective system, focuses these beams in two spots in the information layer of the record carrier to be read, whereby the distance between the spots in the direction perpendicular to the information tracks direction is substantially equal to the distance between the information tracks.

These and other aspects of the invention will be apparent from and elucidated by way of non-limitative example with reference to the embodiments described hereinafter and illustrated in the accompanying drawings.

In the drawings:

Fig. shows diagrammatically an embodiment of a conventional read device;
Fig.2 shows the positions of the sub-beams of different diffraction orders relative to the pupil of the objective lens of the device;
Fig.3 shows the modulation transfer function as a function of a normalized spatial frequency for a conventional record carrier;
Figs.4 and 5 show the principle of reading with enhanced resolution by means of shifting sub-beams diffracted by the information structure;
Fig.6 shows the modulation transfer functions as a function of a normalized spatial frequency for a record carrier according to the invention;
Fig. 7 shows, in a cross-section, a portion of a first embodiment of a birefringent grating for use with the record carrier;
Fig. 8 shows, in a cross-section, a portion of a second embodiment of a birefringent grating for use with the record carrier;
Fig.9 shows an embodiment of a device for reading the record carrier, and
Fig. 10 shows the effect the birefringent grating has on the sub-beams diffracted by the information structure.

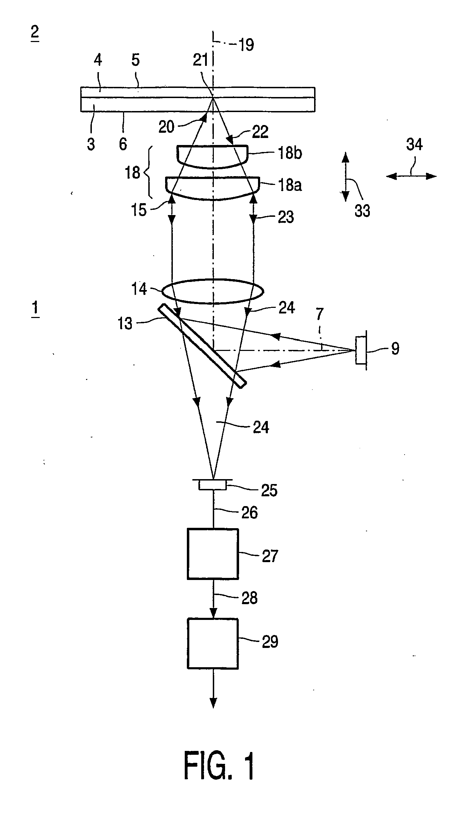

Fig.1 diagrammatically shows an embodiment of a device for scanning an optical record carrier 2. The record carrier is in the form of an optical disc that comprises a transparent layer 3, on one side of which an information layer 4 is arranged. The side of the information layer facing away from the transparent layer is protected from environmental influences by a protection layer 5. The side of the transparent layer 3 facing the device is called the entrance face 6. The transparent layer acts as a substrate for the record carrier by providing mechanical support for the information layer and/or as a protective layer for the information layer by keeping dust particles, scratches and fingerprints away from this layer. Information may be stored in the information layer 4 of the record carrier in the form of optically detectable information areas, or marks, arranged in substantially parallel, concentric or spiral, tracks, not shown in Fig.1. These information areas alternate with intermediate areas in the track direction. The information areas may be in any optically readable form, e.g. in the form of pits or bumps or areas with a reflection coefficient or a direction of magnetization different from their surroundings, or a combination of these forms.

The scanning device 1 comprises a radiation source, preferably in the form of a semiconductor laser, 9 emitting a radiation beam 7. The radiation beam, or read beam, is used for scanning the information layer 4 of the optical record carrier 2. A beam splitter 13, for example a semi-transparent mirror reflects the diverging radiation beam from the radiation source 9 on the optical path towards a collimator lens 14, which converts the diverging beam 7 into a collimated beam 15. The collimated beam is incident on an objective system 18. The objective system, usually called objective lens, may comprise one or more lenses and/or a grating. The objective system of Fig.1 consists in this example of two elements, a first lens 18a and a second lens 18b. The objective lens 18 has an optical axis 19. The objective lens changes the beam 15 to a converging beam 20, which is incident on the entrance face 6 of the record carrier 2. The converging beam 20 forms a read spot 21 on the information layer 4.

Radiation reflected by the information layer 4 forms a diverging beam 22, which is transformed into a substantially collimated beam 23 by the objective lens 18 and subsequently into a converging beam 24 by the collimator lens 14. The beam splitter 13 separates the forward beam 12 and the reflected beam 24 by transmitting at least part of the converging beam 24 towards a radiation-sensitive detection system 25. The detection system captures the radiation transmitted by the beam splitter 13 and converts it to electrical output signals 26. A signal processor 27 converts these output signals to various other signals, which are processed by a signal processing circuit 29 The processing circuits 27 and 29 may be located in the scanning device separately from the optical head 1.

One of the signals is an information signal 28, the value of which represents information read from the information layer 4. The information signal is processed by an information-processing unit for error correction 29. Other signals supplied by the signal processor 27 are a focus error signal and a radial error signal. The focus error signal represents the axial height difference between the spot 21 and the information layer 4. The radial error signal represents the distance in the plane of the information layer 4 between the spot 21 and the centre of a track in the information layer to be followed by the spot.

The focus error signal and the radial error signal are supplied to a servo circuit. This circuit converts these signals to a focus servo signal for controlling a mechanical focus actuator (not shown) in the optical head and a tracking servo signal for controlling centring of the spot on the track momentarily scanned. The mechanical focus actuator controls the position of the objective lens 18 in the focus direction 33, thereby controlling the actual position of the spot 21 such that it coincides substantially with the plane of the information layer 4. A further mechanical actuator, such as a radially movable arm (not shown) alters the position of the optical head 1 in the radial direction 34 of the record carrier 2, thereby controlling the radial position of the spot 21 to lie above a track to be followed in the information layer 4. The tracks in the record carrier 2 run in a direction perpendicular to the plane of Fig. 1.

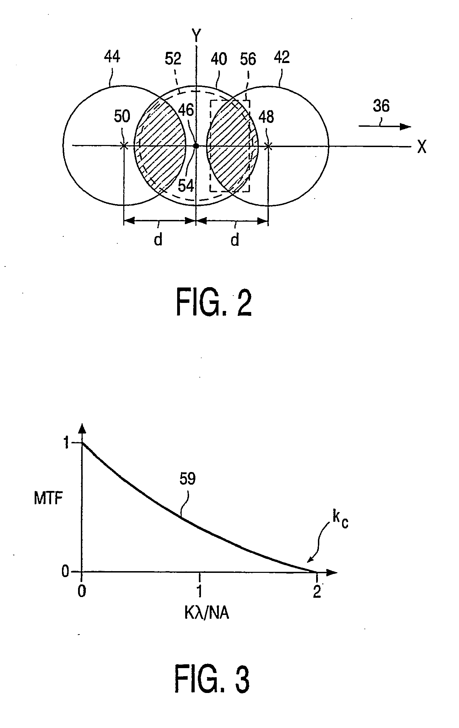

As described in US-A 4,242,579, the portion of the information structure in the vicinity of the scanning spot 21 behaves as a two-dimensional diffraction grating, which splits the incident read beam 20 into a, non-deflected, zero order sub-beam and deflected first order sub-beams and higher order sub-beams. The zero order sub-beam and portions of the deflected sub-beams again enter the objective lens 18. In the plane of the exit pupil of the objective lens the centres of the various sub-beams are spaced apart from each other. Fig.2 shows the situation in this plane.

The circle 40 having the centre 46 represents the cross-section of the zero order sub-beam in this plane. The circles 42 and 44 having centres 48 and 50 represent the cross-section of the (+1) order sub-beam and the (-1) order sub-beam, respectively, which are diffracted in the tangential, or track direction 36. In Fig.2 the dashed circle 52 represents the pupil of the objective lens. For the situation shown in this Fig., the zero order sub-beam fills the pupil entirely, so that in reality the circles 40 and 52 coincide. Only that portion of the radiation coming from the information layer, which falls within the objective pupil, is used for information scanning. For information reading use is made of the phase variations in the (+1) and (-1) order sub-beams relative to the zero order sub-beam.

In the hatched areas in Fig.2 said first order sub-beams overlap the zero order sub-beam and interference occurs. The phases of the first order sub-beams vary if the scanning spot moves across an information track. As a result, the intensity of the total radiation passing through the exit pupil of the objective lens, and thus incident on the radiation-sensitive detection system varies.

When the centre of the scanning, or read spot coincides with the centre of an information area, for example a pit, a given phase difference $\psi$ exists between a first order sub-beam and the zero order sub-beam. If the scanning spot moves from a first information area to the next information area, the phase of the first order beam increases by $2\pi$. Therefore, it may be stated that as the scanning spot moves in the tangential direction the phase of the first order beam relative to the zero order sub-beam varies with $\omega.t$. Therein $\omega$ represents a time frequency, which is determined by the spatial frequency of the information areas and by the scanning speed. The phase $\phi(+1)$ of the first order sub-beam b(+1) relative to the zero order sub-beam may then be represented by:

$$\phi((+1) = \psi + \omega.t$$

The intensity variation caused by interference of the b(+1) sub-beams with the zero order sub-beam can be detected by a radiation-sensitive detection element 56, represented by broken lines in Fig.2, which detector is disposed in the plane of the exit pupil of the objective lens or in an image thereof. For a specific phase depth of the information structure, for which $\psi = \pi$ radians, the intensity variation over the exit pupil is symmetrical. Then, as shown in Fig,1, the beam portions passing through the two areas of overlap can be concentrated on one detector element. The time dependent output signal of the detector 25 may then be represented by:

$$Si = A(\psi).cos\psi.cos\omega t$$

Wherein $A(\psi)$ decreases at decreasing values of $\psi$. For a given phase depth of the information structure the amplitude $A(\psi)cos\psi$ is constant. The frequency of the signal Si is then determined by the information, which is momentarily scanned.

Thus far only first order sub-beams have been discussed. It is obvious that the information structure will diffract radiation also in higher diffraction orders. The radiation intensities in these orders is low and the diffraction angles are so large at the spatial frequencies of the information structure considered here, that a negligible portion of the higher order beam falls within the pupil of the objective lens 18. The influence of the higher order beams on the detector signal Si may therefore be neglected.

The optical scanning system discussed herein above has a given cut-off frequency $f_c$. The distance d between the centre 46 of the objective pupil 52 and the centres 48 and 50 of the first order sub-beams is proportional to $\lambda.f$, wherein f represents the spatial frequency of the information areas in the scan direction and $\lambda$ the wavelength of the scanning beam 20. Fig.2 represents the situation that the frequency f is slightly higher than half the cut-off frequency $f_c$. If the frequency f increases, the (+1) order sub-beam will move to the right and the (-1) order sub-beam will move to the left, and the distance d will increase. For a given value of f, known as the conventional cut-off frequency $f_c$, the circles 42 and 44 no longer intersect the circle 52, but are merely tangent to this circle. The first order sub-beams then no longer pass through the pupil of the objective lens 18 and these sub-beams can no longer interfere with the zero order sub-beam. The information of the record carrier can then no longer be scanned by detecting the total radiation energy that passes through the objective pupil. For reading out in reflection, as shown in Fig.1, the conventional cut-off frequency is given by:

$$f_c = 2.NA/\lambda$$

wherein NA is the numerical aperture of the objective lens.

Fig.3 shows the capability of the conventional read method and -device in terms of the modulation transfer function MTF, which is a measure for the amplitude of the information signal read from the information layer, or for the contrast viewed by the detection system. This MTF, which is maximum 1, is plotted as a function of a parameter $K.\lambda/NA$, which can be called normalized frequency parameter, i.e. the spatial frequency made independent from $NA/\lambda$. If the normalized parameter approaches value 2, thus if the spatial frequency K approaches the value $2.NA/\lambda$, the MTF will go to zero, which means that information details having this frequency $K_c$ can not be read adequately.

In order to increase the resolution of the scanning device, i.e. to allow reading of spatial frequencies larger than the conventional cut-off frequency, it is proposed in US-A 4,242,579 to shift the sub-beams relative to the pupil of the objective lens in the tangential direction 36. The shift is such that a portion of one first order sub-beam and a portion of the zero order sub-beam still pass through the pupil of the objective lens also if the spatial frequency of the information structure is larger than the cut-off frequency.

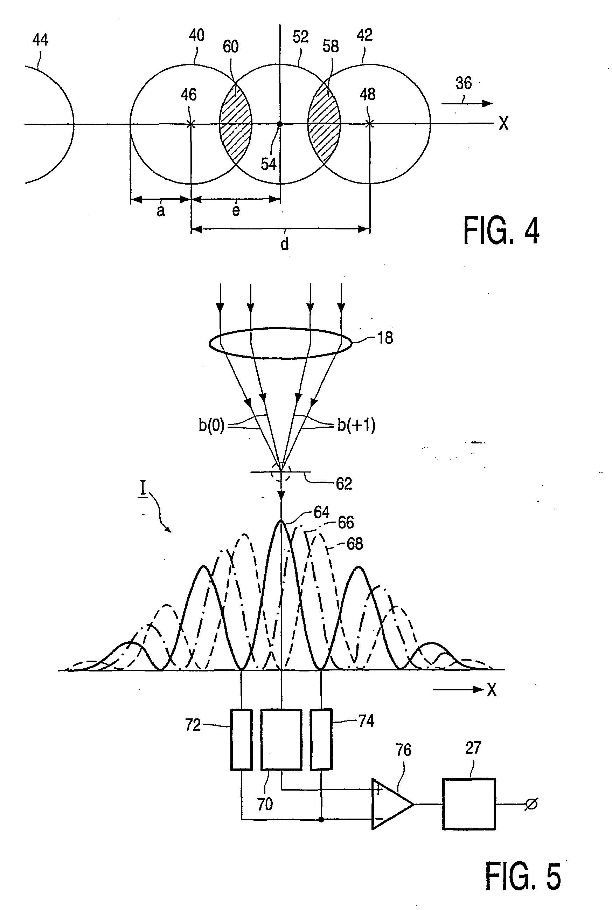

Fig.4 represents the situation in which the spatial frequency is approximately 1,5 times larger than the cut-off frequency of the scanning device of Figs 1 and 2. The distance d between the centre 46 of the zero order sub-beam and the centre 48 of the +first order sub-beam 42 is approximately 3 times larger than the distance d in Fig.2. Because these sub-beams have been shifted to the left in Fig.4, the hatched portions 58 and 60 fall within the pupil 52 of the objective lens. The - first order sub-beam 44 now falls entirely outside this pupil.

As shown in Fig. 5, the portions of the zero-order sub-beam b(0) and of the first order sub-beam b(+1) passing through the objective lens 18, represented here by a single lens element, and through the collimator lens 14 are concentrated in the plane 62 of the detector 25. Since the scanning beam is a coherent beam, said beam portions will interfere with each other in the plane 62, so that an interference pattern I is produced, which varies in tangential direction 36, as is denoted by the curves 64, 66 and 68 in Fig.5. The solid curve 64 represents the intensity variation when the scanning spot 21 is situated exactly in the centre of an information area. If the scanning spot moves away from this centre towards a subsequent information area, the intensity pattern at two consecutive instants will be according to the dash-dot curve 66 and the dashed curve 68, respectively. During scanning of the read spot 21 the intensity pattern thus travels across the detection plane. For a narrow detector having a fixed location, such as detector 70 in Fig.5, the radiation, which this detector receives consequently varies during scanning. Thus the output signal of this detector varies, depending on the information being read momentarily.

The width of the detector, in the tangential direction, should be small relative to the period of the intensity pattern. This period is determined by the local spatial frequency of the information areas being scanned. For a specific information structure in a record carrier or of documents or optical representations to be scanned the maximum spatial frequency is known so that the width of the detector 70 can be adapted accordingly.

The output signal of detector 70 is supplied to a signal processor 27. The signal-to-noise ration of the read out signal can be improved by arranging two additional detectors 72 and 74 on both sides of detector 70 and at a distance of approximately half the period of the intensity pattern. The output signals of these detectors are added and their sum subtracted from the output signal of detector 70 in a differential amplifier 76, which output is connected to the signal processor 27.

In the scanning device of US-A 4,242,579 the shift of the sub-beams with respect to the pupil of the objective lens shown in Fig.4 is realized by tilting the axis of the objective lens and the record carrier relative to each other. The distribution of the radiation reflected by the information layer is then asymmetric with respect to the aperture of the projection lens so that only portions of zero order sub-beam and of only one of the first order sub-beams passes through the lens. The spatial frequency that can be read can thus be increased to, for example two times the conventional cut-off frequency. However, as the focused read beam passes the substrate in a skew direction and as this substrate should have a given thickness, for example 1,2 mm, to provide sufficient mechanical strength and dust protection, an unacceptable amount of aberrations may be introduced in the read beam and thus in the read spot. A main aberration is coma, which causes cross talk between neighbouring tracks of the information structure. Other types of aberration are astigmatism and higher order aberrations.

To meet this problem, it has recently been proposed, in co-pending EP patent application 03100817.0 to use a conventional optical reading device and to provide the information layer of the record carrier with a diffraction grating for directing reflected radiation of the read beam, which beam itself is perpendicularly incident on the information layer, in a direction at a sharp angle with respect to the chief ray of the incident read beam. Perpendicularly incident is understood to mean that the chief ray of the incident beam, which is currently a converged beam, is perpendicular to the record carrier. The diffraction grating is called a regular or information-less grating, to distinguish it from the diffractive information structure. As described in EP patent application 03100817.0, the regular diffraction grating deflects portions of the first order sub-beams formed by the diffractive information structure such that these portions pass through the objective lens and are, together with radiation that is double diffracted in the zero order, focussed on the detection system to interfere at the location of this system. This detection system may be the same as that used in the read device disclosed in US-A 4,242,579. For further details about the effect of the regular grating and for embodiments of the record carrier provided with such a grating, reference is made to EP 03100817.0.

If Kg is the spatial frequency of the regular grating and $K_i$ is the spatial frequency of the information structure in the information layer, the read beam will meet a structure showing an effective spatial frequency $K_e$, which is given by:

$$K_e = K_i - m.K_g$$

Wherein m is the used diffraction order of the regular grating, which is usually a first order (m = 1). $K_e$ will remain smaller than the conventional cut-off frequency if the periodicity, or spatial frequency, of the regular grating is sufficient large. This periodicity determines the angle at which a sub-beam of a given diffraction order is deflected by the grating; the larger the periodicity, i.e. the smaller the grating period, the larger the diffraction angle is.

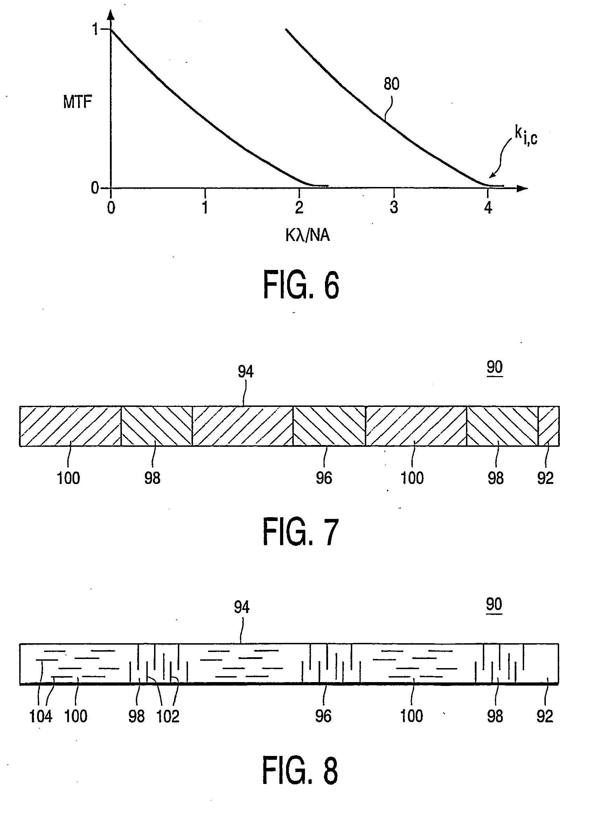

In this way an information structure having a larger spatial frequency up to, for example, twice the conventional cut-off frequency can be read. This illustrated in Fig.6 by graph 80. This graph shows the modulation transfer function as a function of the spatial frequency in an information layer, which is provided with a regular grating. As in Fig.3, the MTF is plotted as a function of the normalized frequency parameter $K_i.\lambda/NA$. The maximum spatial frequency $K_{i,c}$ of the information structure that can be read is now given by $K_{i,c}.\lambda.NA = 4$: thus $K_{i,c} = 4 NA/\lambda$, which is two times the conventional cut-off frequency.

Providing the information layer with a regular grating allows reading of an information structure having spatial frequencies in the range from $2.NA/\lambda$ to $4.NA/\lambda$ and thus shifts the band of spatial frequencies that can be read over $m.K_g$. However, the width of the spatial frequency band is not enlarged and remains $2.NA/\lambda$

According to the invention the spatial frequency band can be enlarged to $4.NA/\lambda$ by providing the information layer with a birefringent grating and by using a read device that is provided with a radiation source unit which supplies radiation having two mutually perpendicular polarization components. A birefringence grating is understood to mean a grating that shows a different optical behaviour for two mutually perpendicular polarisation components

The birefringent grating should satisfy the condition that only for a first type of radiation, which has a predetermined first polarisation direction, the grating is active, or "visible", i.e. it splits a beam of this type of radiation into first order beams. For radiation of a second type, which has a second polarisation direction perpendicular to that of the first type of radiation, the grating should be non-active, or invisible, i.e. it should pass a beam of this type of radiation as a single beam, which may be called a zero-order beam.

Fig.7 shows a small portion of an embodiment of such a birefringent grating 90, which comprises a layer 92 of, for example a liquid crystal material. The grating is shown in a vertical cross-section, i.e. in a plane perpendicular to the upper surface 94 and the lower surface 96. Only three of a large number of grating strips 98 and intermediate strips 100 are shown. The effective refractive index of the material in the grating strips 98 is different from the effective refractive index in the intermediate strips 100. Thus, the grating is a phase grating, i.e. it introduces a phase difference between beam portions, which are incident on the grating strips, and beam portions, which are incident on the intermediate strips. The effective refractive index is understood to mean the refractive index for the radiation polarization component for which the grating should be active. The different refractive indices are denoted by different hatching directions in Fig.7.

The material of the grating strips 98 and intermediate strips 100 is a liquid crystal (LC) material, whereby the material in the strips has another birefringence and refractive index than the material in the intermediate strips. This can be achieved, for example, by creating in the grating strips an orientation of the LC molecules, i.e. an alignment direction, which is different from, for example perpendicular to, the orientation of the LC molecules in the intermediate strips. The structure of alternating strips showing different refractive indices will be visible; i.e. acts as a grating for radiation having a polarisation direction parallel to the plane of drawing of Fig.7 and parallel to the grating surfaces, thus perpendicular to the direction of the grating lines. Radiation having a polarisation direction perpendicular this plane, thus parallel to the direction of the grating lines, will not be diffracted.

The structure of Fig. 7 can be produced by means of photo-induced diffusion during the formation of a liquid crystalline network from a mixture of monomer materials. This technique is, for other applications described in the paper: "Photo-induced diffusion during the formation of liquid crystalline networks: A powerful tool to control polymer morphology down to nano scale level" by D.J. Broer et al in Recent Res. Devel. in Polymer Science, 2, 313,1998. The technique is also described in the paper: "Photo-induced opposite diffusion of nematic and isotropic monomers during patterned photo polymerisation" by C.F. v. Nolte et al in Chem. Mater. 10, 135, 1998. A monomer mixture can be polymerised, i.e. photopolymerised, by means of radiation, such as ultraviolet (UV) light. If one of the monomers comprises liquid crystal molecules, a stable cross-linked LC network can be obtained. If spatially modulated radiation, i.e. radiation having a periodic intensity distribution, is used, for polymerisation, the composition of the polymerised material will show a periodic variation, because differences in radiation intensity create composition gradients in blends of reactive mesogens. Reactive mesogens are liquid crystals, which are provided with one or more reactive groups. The composition gradient induces diffusion of material particles in the layer of material, which results in periodic variations of parameters, such as the refractive index and birefringence. For example, and as described in the above-mentioned paper of Broer et al, from a mixture of a LC diacrylate and an isotropic monoacrylate a birefringent hologram can be produced, which has a spatial period of 10 $\mu$m and shows a diffraction efficiency of 50% for radiation having a polarisation direction parallel to the LC alignment direction. For radiation having the polarisation direction perpendicular to the LC alignment direction the diffraction efficiency is only 15%. In this way, a birefringent diffraction grating can be produced that under circumstances can be used in a record carrier according to the invention, although the birefringence is not used to the optimum. This is due to the remaining difference between the ordinary refractive index $n_o$ of the material portions showing birefringence and the refractive index of the isotropic material outside these portions.

The grating thus produced is called a holographic grating because a holographic technique is used, i.e. two interfering beams are used to obtain the grating pattern.

Another method of producing a birefringent holographic grating is described by Boiko et al in Optics Letters 27 (19), 2002, p. 1717 and in publications referenced to in this paper. In this method a so-called PDLC mixture comprising a liquid crystal material and isotropic monomers is pattern-wise polymerised. Instead of by two interfering beams the pattern can also be obtained by exposing the mixture via a mask that is provided with a pattern of slits corresponding to the required pattern in the mixture. During the locally enhanced polymerisation of the isotropic monomer, the liquid crystal phase-separates in discrete layers. These layers are still connected by polymer protrusions, i.e. thin fibre like polymeric structures. Because of anisotropic confinement, these protrusions orient the liquid crystal in the direction of the protrusions, i.e. perpendicular to the polymer layer. By selecting the liquid crystal and the monomers such that one of the refractive indices of the liquid crystal matches with the refractive index of the monomer, a birefringent, i.e. polarisation sensitive grating is obtained. The gratings described in the cited publications are switchable gratings. The grating used in the record carrier according to the invention is a passive, i.e. non-switchable grating. This allows providing the phase-separated liquid crystals with reactive groups of different nature than those of the isotropic monomer and converting the liquid crystals into a solid polymeric structure after the phase separation has been accomplished.

A better alternative for the birefringent diffraction grating for use with the invention is shown in Fig.8. This Fig. again shows a vertical cross-section of a small portion of the grating. The grating material comprises a nematic liquid crystal and the orientation of the liquid crystal, i.e. the direction of alignment of the crystal molecules in the grating strips 98 is different from, preferably perpendicular to, this orientation in the intermediate strips 100. The directions of alignment are denoted by the vertical lines 102 and the horizontal lines 104, respectively. For linearly polarised radiation having its polarisation direction perpendicular to the plane of drawing of Fig. 8 the plate 90 shows an ordinary refractive index $n_o$ all over the plate so that the plate acts as a plane parallel plate. For linearly polarised radiation having its polarisation direction in the plane of drawing and parallel to the major surfaces of the grating the refractive index alternates between $n_o$ (in the intermediate strips 100) and the extra ordinary refractive index $n_e$ (in the grating strips 98). The difference $\Delta n = n_o - n_e$ may have a value up to 0,15.

Such a grating can be produced by polymerisation of reactive mesogens. By exposure with UV or visible radiation or with electrons or by heat the reactive groups of the mesogens can be polymerised. An initiator may be added, which, upon activation produces reactive particles, e.g. radicals, which initiate the polymerisation reaction. The reactive mesogens can be aligned at a surface on which the grating is to be formed.

A convenient method to create a pattern of areas having alternating orientation of reactive mesogens molecules is described by Wilderbeek et al in Advanced Materials, 15 (12), 2002, p.985. According to this method a substrate is covered with a thin layer of a photosensitive polymer. By exposing the polymer with UV radiation via a patterned mask the required pattern is obtained. During the exposure, unsaturated groups, which have their transition moment parallel to the electrical field vector of the UV radiation will cross-link and are immobilized. The non-reacted moieties are still mobile and in the course of time they position their transition moments more or less parallel to the polarised UV radiation and react also. At the end, an anisotropic surface is obtained with the capability to align liquid crystals.

In the exposed areas the reactive mesogens will align later in the direction of the electrical field vector of the polarised UV radiation. The non-exposed areas still contain the original unsaturated moieties and therefore are reactive. When the surface is treated with an alkane thiol under heat and a free-radical generator, the remaining unsaturated groups react with the thiol group. As a result the surface is modified with a-polar alkane tails, which align the liquid crystals (reactive mesogens) perpendicular to the surface. The reactive mesogens on a surface treated in this way thus alternating orient parallel to the surface and perpendicular to the surface, respectively so that, after polymerisation by the exposure with UV radiation, a structure as shown in Fig.8 is obtained.

The birefringent grating may be formed directly on the record carrier, i.e. the successive coating and exposure steps are carried out the record carrier. Alternatively, the grating structure may be produced, separate from the record carrier, for example between temporary substrates, for example of plastic, and the finished grating placed on the information layer of the record carrier.

As already remarked, the birefringent grating should have a grating period smaller than the period of the diffractive information structure of the record carrier so that the diffraction angle at which the first order beams are diffracted by the birefringent grating is smaller than the angle at which the first order beams are diffracted by the information structure so that double diffracted order beams can pass through the objective system. This means that the period of the birefringent gratin should be well below $\lambda/2.NA$, wherein NA is the numerical aperture of the objective system.

To avoid cross talk between the low-frequency information structure and the high-frequency information structure, it should be avoided that the grating generates a zero order sub-beam of the read beam polarisation component for which it is active. This condition is satisfied if the optical path length difference for a beam portion passing through a grating strip and a beam portion passing through an intermediate strip is $\lambda/2$ or an uneven multitude thereof, wherein $\lambda$ is the wavelength of the radiation. Said optical path length difference is the product of $\Delta n$ and the thickness $t_g$ of the grating layer. Thus, if cross talk should be eliminated, the thickness of the grating layer should be $\lambda/2\Delta n$ or an uneven multitude thereof. This holds for a transmission grating, for a reflective grating the thickness of the grating layer should be $\lambda/4\Delta n$. A transmission grating can be transformed into a reflective grating by providing its back side with a reflective layer.

Occurrence of cross talk between higher frequencies (> $2.NA/\lambda$) signals and lower frequencies (<$2.NA/\lambda$) can be avoided also by a proper arrangement of the information structure. The information areas of higher and lower spatial frequencies can be arranged in first, higher frequency, tracks and second, lower frequency, tracks respectively and these tracks can be interleaved, i.e. each higher frequency track is arranged between two lower frequency tracks and reversed. By reading the higher frequency tracks with a first spot and the lower frequency tracks with a second spot, cross talk can be minimised.

Interleaving has the additional advantage that the distance between a high frequency track and a low frequency track is, for example half of the track distance of a conventional information structure so that the information density and thus the capacity of the novel record carrier may be, for example twice those of a conventional record carrier.

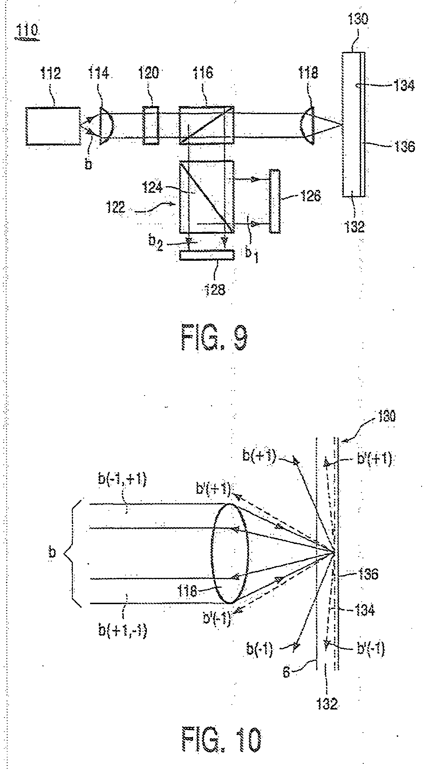

For reading a record carrier having an information structure, which comprises a large spectrum of spatial frequencies, a device 110 as shown in Fig.9 can be used. This device comprises a diode laser 112 that emits a single radiation beam b, a collimator 114, a beam splitter 116, an objective lens 118 and a detection branch 122. The read beam b should comprise two mutually perpendicular polarised components. Such a beam can be obtained by orienting the cavity slit of the diode laser in an appropriate direction, such that the polarisation direction of the linearly polarised beam b is at an angle of 45° with the LC alignment direction in the grating strips of the birefringent grating 136 on top of the information layer 134 of the record carrier 130, which has a substrate 132. Alternatively, and as shown in Fig.9, a $\lambda/2$ plate 120 may be arranged between the diode laser 112 and the beam splitter 116, which plate rotates the polarisation direction of the linearly polarised laser beam such that the beam incident on the record carrier, and thus on the birefringent grating 136, has two mutually perpendicular polarisation components. As a second alternative, element 120 may be replaced by a $\lambda/4$ plate, which converts the linearly polarised laser beam into a circularly polarised beam, which is composed of two mutually perpendicular polarised beam components.

The reflected beam components $b_1$ and $b_2$, which have been modulated by information areas of high frequency and information areas of low frequency, respectively have to be detected separately. This can be realised by including a polarisation-sensitive beam splitter 124 in the detection branch, which splitter reflects beam component $b_1$ to detector 126 and passes beam component $b_2$ to detector 128. Detector 128 supplies a signal with frequencies in the range up to the conventional cut-off frequency $f_c$ and detector 126 supplies a signal having frequencies in the range from the frequency $f_c$ up to 2. $f_c$.

In case the information structure of the record carrier comprises interleaved higher frequencies tracks and lower frequencies tracks, two spots are needed to read the higher frequencies tracks and the lower frequencies tracks, respectively. The radial distance between these spots should be equal to the distance between the centres of a higher frequencies track and the neighbour low frequencies track. Such a spots-separation can be obtained, for example, be replacing neutral beam splitter 116 by a prism of Wollaston. This prism splits a beam into two angularly separated beams having different polarisation directions. The objective system 118 converts the different directions of these beams into different positions of the spots formed by these beams in the information layer. In this way, the intensity of the read beam polarisation component that should read higher frequencies tracks is minimised at the locations of the lower frequencies tracks.

Fig. 10 shows the effect the birefringent grating has on the sub-beams diffracted by an information structure. This Figure shows only those elements of Fig.9 which are relevant for the present invention, namely the objective lens 118 and the record carrier 130 with the information layer 134 and the diffraction grating 136. This grating splits an incident read beam b in a plus first order sub-beam b'(+1) and a minus first order sub-beam b' (-1). The period of the grating is larger than the [period of the information structure in the information layer134 so that the sub-beams b' (+1) and b'(-1) are deflected at an angle that is smaller than the angle at which the sub-beams b(+1) and b(-1) are deflected by the information structure. The sub-beams b(+1) and b(-1) are denoted by solid lines in Fig. 10. Since the grating 136 is superimposed on the information structure 134, the sub-beams b(+1) and b(-1) formed by the information structure will be further diffracted by the grating in double diffracted first order sub-beams. Of these double diffracted sub-beams the sub-beams b(+1,-1) and b(-1,+1) will pass through the pupil of the objective lens system as shown in Fig. 10. The first and second indices of these sub-beams relate to the order of diffraction caused by the information structure 134 and by the grating 136, respectively. In this way it is achieved that portions of the first order sub-beams, which are modulated by the information structure reach the radiation-sensitive detection system and reading with substantially enhanced resolution becomes possible.

This type of reading is used for the information areas having a high spatial frequency, in the range from the conventional cut-off frequency up to two times this frequency, and can only be performed by that component of the read beam which has a polarisation direction in the plane of drawing of Figs. 7 and 8 and perpendicular to the periodicity f the grating, i.e. perpendicular to the direction of the grating lines (TM polarisation). To prevent cross talk with lower frequencies information signals, the grating 136 should only generate first order sub-beams and no zero-order sub-beam. The other beam component, which is polarized in a direction perpendicular to the plane of drawing of Figs. 7 and 8 and parallel to the grating lines (TE polarisation) and is not diffracted by the grating, can only read information areas having a lower spatial frequency, in the range up to the conventional cut-off frequency. To prevent cross talk with higher frequencies information signals, the grating 136 should not generate first and higher order for this polarisation component.

As is discussed in said unpublished patent application EP 03100817.0 for a conventional grating, the direction of the grating strips of the birefringent grating can be adapted to the arrangement of the information areas in the information layer. If these areas are arranged in tracks, the said direction may be parallel to the track direction, but also in the track direction or in any direction between these two directions. In case the information areas are arranged according to a 2D-OS (two-dimensional optical storage) structure, i.e. a structure composed of blocks each comprising a number of information areas, which are simultaneously read, for example by a matrix of a corresponding number of detectors, the direction of the grating strips is preferably diagonal to the blocks.

In case the pitch of the information areas varies across the record carrier, for example decreases from the outer tracks to the inner tracks, the pitch of the grating may show a corresponding variation.

The record carrier according to the invention may also be a band shaped record carrier or an optical card.

## Claims

1.  An optical record carrier (130) having at least one information layer (134), wherein information is encoded in an information structure comprising information areas, which alternate with intermediate areas, **characterized in that** the information layer is provided with a polarisation-sensitive diffraction grating (136) comprising a grating layer, which is divided in grating strips of a first type alternating with intermediate strips of a second type, at least one of the types comprising a birefringent material, and **in that** the refractive indices of the grating strips (98) and intermediate strips (100) are different for radiation polarised in a direction parallel to the grating plane and perpendicular to the grating strips.

2.  An optical record carrier (130) as claimed in claim 1, **characterized in that** the birefringent material is a liquid crystal.

3.  An optical record carrier (130) as claimed in claim 2, **characterized in that** the liquid crystal is a nematic liquid crystal.

4.  An optical record carrier (130) as claimed in claim 1, **characterized in that** the birefringent material is a polymeric material comprising polymerised aligned liquid crystalline monomers.

5.  An optical record carrier as claimed in any one of claims 1-4, **characterized in that** the grating strips comprise an anisotropic material having at least two refractive indices and the intermediate strips comprise isotropic material and **in that** one the refractive indices of the anisotropic material is substantially equal to the refractive index of the isotropic material.

6.  An optical record carrier (130) as claimed in any one of claims 1-4, **characterized in that** the grating strips differ from the intermediate strips **in that** the degree of alignment of the liquid crystal molecules in the grating strips is substantially different from that degree in the intermediate strips.

7.  An optical record carrier (130) as claimed in any one of claims 1-4, **characterized in that** the grating strips differ from the intermediate strips **in that** the direction of alignment of the liquid crystal molecules in the grating strips is different from that direction in the intermediate strips.

8.  An optical record carrier (130) as claimed in any one of claims 1-7,**characterized in that** the birefringent grating is a transmission grating.

9. An optical record carrier (130) as claimed in any one of claims 1-7, **characterized in that** the birefringent grating is a reflective grating.

10. An optical record carrier (130) as claimed in any one of claims 1-9, **characterized in that** first information tracks comprising information areas showing higher spatial frequencies alternate with second information tracks comprising information areas showing lower spatial frequencies.

11. A device (110) for reading a record carrier as claimed in claim 10, which device comprises a radiation source unit (112) for supplying read beam radiation, an objective system (118) for focusing the read beam radiation in the information layer and a detection branch comprising a radiation-sensitive detection system (124, 126, 128) for converting read beam radiation the record carrier into an electrical signal, the radiation source unit supplies read beam radiation having two mutually perpendicular polarisation components, the detection branch comprising a polarisation-sensitive beam splitter (124) and the radiation-sensitive detection system comprising a separate detector (126, 128) for each of the two polarisation components from the beam splitter, **characterized in that** the radiation components constitute two spatially separated read beams and **in that** the objective system focuses these beams in two spots in the information layer of the record carrier to be read, whereby the distance between the spots in the direction perpendicular to the information track direction is substantially equal to the distance between the first information tracks and the second information tracks.

**Patentansprüche**

1. Optischer Aufzeichnungsträger (130) mit mindestens einer Informationsschicht (134), wobei Informationen in einer Informationsstruktur codiert sind, die Informationsbereiche umfasst, welche sich mit Zwischenbereichen abwechseln, **dadurch gekennzeichnet, dass** die Informationsschicht mit einem polarisationsempfindlichen Beugungsgitter (136) ausgestattet ist, das eine Gitterschicht umfasst, welche in Gitterstreifen eines ersten Typs aufgeteilt ist, die sich mit Zwischenstreifen eines zweiten Typs abwechseln, wobei mindestens einer der Typen ein doppelbrechendes Material umfasst, und dadurch, dass die Brechungsindizes der Gitterstreifen (98) und Zwischenstreifen (100) für Strahlung, die in einer Richtung parallel zur Gitterebene und senkrecht zu den Gitterstreifen polarisiert ist, unterschiedlich sind.

2. Optischer Aufzeichnungsträger (130) nach Anspruch 1, **dadurch gekennzeichnet, dass** das doppelbrechende Material ein Flüssigkristall ist.

3. Optischer Aufzeichnungsträger (130) nach Anspruch 2, **dadurch gekennzeichnet, dass** der Flüssigkristall ein nematischer Flüssigkristall ist.

4. Optischer Aufzeichnungsträger (130) nach Anspruch 1, **dadurch gekennzeichnet, dass** das doppelbrechende Material ein polymeres Material ist, das polymerisierte ausgerichtete flüssigkristalline Monomere umfasst.

5. Optischer Aufzeichnungsträger nach einem der Ansprüche 1-4, **dadurch gekennzeichnet, dass** die Gitterstreifen ein anisotropes Material umfassen, das mindestens zwei Brechungsindizes aufweist, und die Zwischenstreifen isotropes Material umfassen, und dadurch, dass einer der Brechungsindizes des anisotropen Materials im Wesentlichen gleich dem Brechungsindex des isotropen Materials ist.

6. Optischer Aufzeichnungsträger (130) nach einem der Ansprüche 1-4, **dadurch gekennzeichnet, dass** sich die Gitterstreifen von den Zwischenstreifen dadurch unterscheiden, dass sich der Grad der Ausrichtung der Flüssigkristallmoleküle in den Gitterstreifen wesentlich von diesem Grad in den Zwischenstreifen unterscheidet.

7. Optischer Aufzeichnungsträger (130) nach einem der Ansprüche 1-4, **dadurch gekennzeichnet, dass** sich die Gitterstreifen von den Zwischenstreifen dadurch unterscheiden, dass sich die Richtung der Ausrichtung der Flüssigkristallmoleküle in den Gitterstreifen von dieser Richtung in den Zwischenstreifen unterscheidet.

8. Optischer Aufzeichnungsträger (130) nach einem der Ansprüche 1-7, **dadurch gekennzeichnet, dass** das doppelbrechende Gitter ein Transmissionsgitter ist.

9. Optischer Aufzeichnungsträger (130) nach einem der Ansprüche 1-7, **dadurch gekennzeichnet, dass** das doppelbrechende Gitter ein Reflexionsgitter ist.

10. Optischer Aufzeichnungsträger (130) nach einem der Ansprüche 1-9, **dadurch gekennzeichnet, dass** sich erste Informationsspuren, die Informationsbereiche umfassen, die höhere Raumfrequenzen aufweisen, mit zweiten Informationsspuren abwechseln, die Informationsbereiche umfassen, die niedrigere Raumfrequenzen aufweisen.

11. Einrichtung (110) zum Lesen eines Aufzeichnungsträgers nach Anspruch 10, wobei diese Einrichtung eine Strahlungsquelleneinheit (112) zum Liefern von Lesestrahl-Strahlung, ein Objektivsystem (118) zum Fokussieren der Lesestrahl-Strahlung in der Informationsschicht und einen ein strahlungsempfindliches Detektionssystem (124, 126, 128) umfassenden Detektionszweig zum Umwandeln von Lesestrahl-Strahlung von dem Aufzeichnungsträger in ein elektrisches Signal umfasst, wobei die Strahlungsquelleneinheit Lesestrahl-Strahlung liefert, die zwei zueinander senkrechte Polarisationskomponenten aufweist, wobei der Detektionszweig einen polarisationsempfindlichen Strahlteiler (124) umfasst und das strahlungsempfindliche Detektionssystem einen separaten Detektor (126, 128) für jede der zwei Polarisationskomponenten von dem Strahlteiler umfasst, **dadurch gekennzeichnet, dass** die Strahlungskomponenten zwei räumlich getrennte Lesestrahlen bilden, und dadurch, dass das Objektivsystem diese Strahlen in zwei Lichtflecken in der Informationsschicht des zu lesenden Aufzeichnungsträgers fokussiert, wobei der Abstand zwischen den Lichtflecken in der Richtung senkrecht zur Richtung der Informationsspuren im Wesentlichen gleich dem Abstand zwischen den ersten Informationsspuren und den zweiten Informationsspuren ist.

## Revendications

1. Support d'enregistrement optique (130) ayant au moins une couche d'informations (134), des informations étant codées dans une structure d'informations comprenant des zones d'informations qui alternent avec des zones intermédiaires, **caractérisé en ce que** la couche d'informations est dotée d'un réseau de diffraction sensible à la polarisation (136) comprenant une couche de réseau qui est divisée en des rubans de réseau d'un premier type alternant avec des rubans intermédiaires d'un deuxième type, au moins l'un des types comprenant un matériau biréfringent, et **en ce que** les indices de réfraction des rubans de réseau (98) et des rubans intermédiaires (100) sont différents pour un rayonnement polarisé dans une direction parallèle au plan du réseau et dans une direction perpendiculaire aux rubans de réseau.

2. Support d'enregistrement optique (130) selon la revendication 1, **caractérisé en ce que** le matériau biréfringent est un cristal liquide.

3. Support d'enregistrement optique (130) selon la revendication 2, **caractérisé en ce que** le cristal liquide est un cristal liquide nématique.

4. Support d'enregistrement (130) selon la revendication 1, **caractérisé en ce que** le matériau biréfringent est un matériau polymère comprenant des monomères cristallins liquides polymérisés alignés.

5. Support d'enregistrement optique selon l'une quelconque des revendications 1-4, **caractérisé en ce que** les rubans de réseau comprennent un matériau anisotrope ayant au moins deux indices de réfraction, **en ce que** les rubans intermédiaires comprennent un matériau anisotrope et **en ce que** l'un des indices de réfraction du matériau anisotrope est sensiblement égal à l'indice de réfraction du matériau isotrope.

6. Support d'enregistrement optique (130) selon l'une quelconque des revendications 1-4, **caractérisé en ce que** les rubans de réseau diffèrent des rubans intermédiaires par le fait que le degré d'alignement des molécules de cristal liquide dans les rubans de réseau est sensiblement différent de ce degré dans les rubans intermédiaires.

7. Support d'enregistrement optique (130) selon l'une quelconque des revendications 1-4, **caractérisé en ce que** les rubans de réseau diffèrent des rubans intermédiaires par le fait que la direction d'alignement des molécules de cristal liquide dans les rubans de réseau est différente de cette direction dans les rubans intermédiaires.

8. Support d'enregistrement optique (130) selon l'une quelconque des revendications 1-7, **caractérisé en ce que** le réseau biréfringent est un réseau de transmission.

9. Support d'enregistrement optique (130) selon l'une quelconque des revendications 1-7, **caractérisé en ce que** le réseau biréfringent est un réseau de réflexion.

10. Support d'enregistrement optique (130) selon l'une quelconque des revendications 1-9, **caractérisé en ce que** des premières pistes d'informations comprenant des zones d'informations présentant des fréquences spatiales plus élevées alternent avec des deuxièmes pistes d'informations comprenant des zones d'informations présentant des fréquences spatiales plus faibles.

11. Dispositif (110) pour lire un support d'enregistrement selon la revendication 10, lequel dispositif comprend unité formant source de rayonnement (112) pour délivrer un rayonnement de faisceau de lecture, un système d'objectif (118) pour focaliser le rayonnement de faisceau de lecture dans la couche d'informations et une dérivation de détection comprenant un système de détection sensible au rayonnement (124, 126, 128) pour convertir le rayonnement de faisceau de lecture provenant du support d'enregistrement en un signal électrique, l'unité formant source de rayonnement qui délivre un rayonnement de faisceau de lecture ayant deux composantes de polarisation mutuellement perpendiculaires, la dérivation de détection comprenant une séparatrice de faisceaux sensible à la polarisation (124) et le système de détection sensible au rayonnement comprenant un détecteur séparé (126, 128) pour chacune des deux composantes de polarisation provenant de la séparatrice de faisceaux, **caractérisé en ce que** les composantes de rayonnement constituent deux faisceaux de lecture spatialement séparés et **en ce que** le système d'objectif focalise ces faisceaux en deux points lumineux dans la couche d'informations du support d'enregistrement devant être lu, la distance entre les points lumineux dans une direction perpendiculaire à la direction des pistes d'informations étant sensiblement égale à la distance entre les premières pistes d'informations et les deuxièmes pistes d'informations.

FIG. 1

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4242579 A
- EP 03100817 A
- US 4325135 A
- JP 09161308 A

### Non-patent literature cited in the description

- **D.J. BROER et al.** Photo-induced diffusion during the formation of liquid crystalline networks: A powerful tool to control polymer morphology down to nano scale level. *Recent Res. Devel. in Polymer Science,* 1998, vol. 2, 313
- **C.F. V. NOLTE et al.** Photo-induced opposite diffusion of nematic and isotropic monomers during patterned photo polymerisation. *Chem. Mater.,* 1998, vol. 10, 135
- **BOIKO et al.** *Optics Letters,* 2002, vol. 27 (19), 1717
- **WILDERBEEK et al.** *Advanced Materials,* 2002, vol. 15 (12), 985